# FASCICULE DE BREVET EUROPEEN

(11) **EP 1 415 697 B1**
(45) Date de publication et mention de la délivrance du brevet: **02.05.2007**
(21) Numéro de dépôt: 03358016.8
(22) Date de dépôt: 27.10.2003
(51) Int. Cl.: B01D 21/01, C02F 1/52

(54) **Installation de traitement de lisier de porc**
Anlage zur Behandlung von Schweinegülle
Installation for treating pig manure

(30) Priorité: 28.10.2002 FR 0213454
(43) Date de publication de la demande: 06.05.2004
(73) Titulaire: EMYG Sarl, 13470 Carnoux en Provence (FR)
(72) Inventeur: Fagiano, Giancarlo, 13470 Carnoux en Provence (FR); Tarrie, Michel, 30340 Rousson (FR); Lejeune, Armand, 85580 Saint Michel de l'Herm (FR)
(74) Mandataire: Roman, Michel

(56) Documents cités:
- DE-A- 4 027 581
- FR-A- 2 686 814
- US-A- 5 614 102

## Description

La présente invention a pour objet une installation de traitement de lisier de porc.

Elle se rapporte d'une manière générale au domaine de la lutte contre la pollution des sols, des cours d'eau et des nappes phréatiques entraînée par l'élevage intensif des porcins.

Le lisier est un mélange liquide de déjections animales (fèces et urines), d'eau et de débris végétaux. Il est obtenu lorsque la litière paillée est supprimée ou fortement réduite (pour limiter la main-d'oeuvre), les animaux étant placés sur des aires bétonnées qui permettent l'écoulement des déjections (aires en pente avec caniveaux ou grilles ajourées ou caillebotis).

La composition du lisier est très variable selon les espèces, l'alimentation et la dilution : un lisier de porc à 5% de matière sèche contient environ 3 kg d'azote, 2 kg de potasse et 2 kg d'acide phosphorique par tonne, mais aussi des métaux lourds (zinc, cuivre, magnésium, etc.) en faible proportion. Il s'agit de produits intéressants pour limiter l'emploi des engrais chimiques, à condition de ne pas en abuser : les doses maximales à épandre devraient rester inférieures à 80 m³ par hectare (10.000 m²) et par an sous peine d'excès d'azote et de métaux lourds pouvant entraîner par ruissellement une pollution des rivières et des nappes phréatiques, et même un " empoisonnement " des sols. Un porc adulte produit plus de 5 m³ de lisier par an, ce qui implique des cuves de stockage assez coûteuses.

Les problèmes de pollution et de nuisance (odeurs) sont aigus dans les zones d'élevage porcin hors sol, comme les Flandres, la Bretagne ou les Pays-Bas. Une réglementation très astreignante s'est mise en place à partir de 1993, fixant les quantités, les modalités et les époques d'épandage des lisiers.

L'effort pour rationaliser la fertilisation se révèle bénéfique dans la lutte contre la pollution. Dans certaines régions (par exemple, la Bretagne), les risques sont dus en grande partie aux excès d'épandage de lisier ou de déjections animales provenant des élevages hors sol (porcs et volailles).

Une trop grande richesse en éléments minéraux nutritifs conduit aussi à une prolifération des algues dans les eaux douces ou salées, entraînant des déséquilibres écologiques (eutrophisation).

Le brevet DE-A-4 027 581 décrit une installation selon le préambule de la revendication 1.

La présente invention a pour objectif de séparer les différentes phases présentes dans le lisier de porc, par l'utilisation d'outils spécifiques dans le but de valoriser les lisiers de porc grâce à l'utilisation d'un procédé global simple et économique pour la préservation et la gestion du patrimoine environnemental.

L'objectif de la présente invention est atteint par une installation selon la revendication 1.

Sur les dessins annexés, donnés à titre d'exemple non limitatif d'une des formes de réalisation d'une installation conforme à la présente demande :
la figure 1 représente une cuve de stockage de lisier équipée pour appliquer le procédé selon l'invention,
la figure 2 montre un hydro-injecteur en perspective axonométrique et à une échelle différente,
la figure 3 est un schéma de principe illustrant le fonctionnement d'un hydro-injecteur,
la figure 4 est la coupe schématique d'un système d'écumage et la figure 5 est une vue en perspective d'un extracteur de potassium.

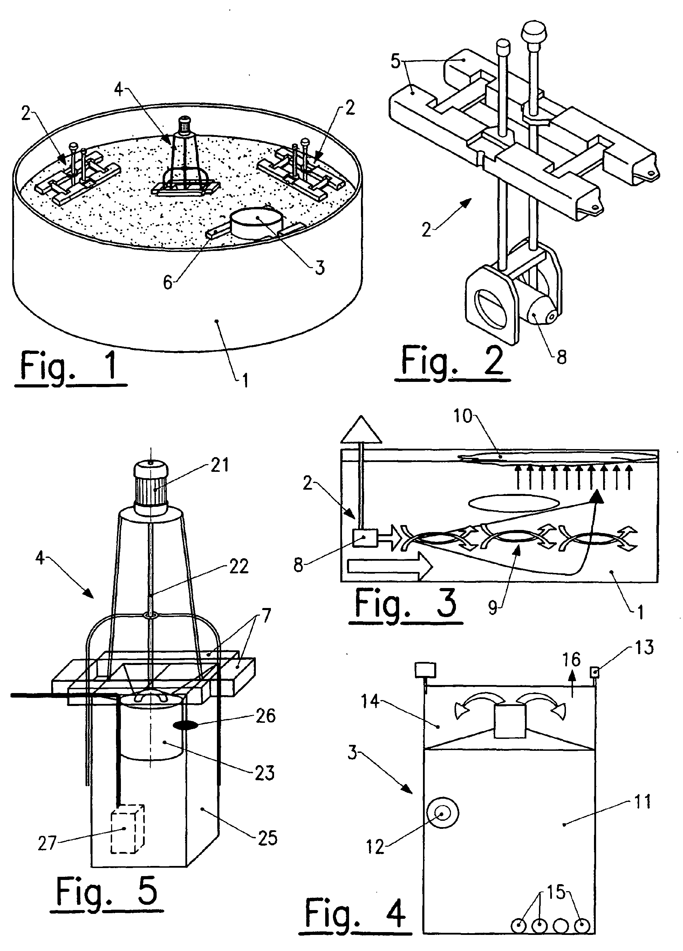

L'installation, figures 1 à 5, est constituée d'une cuve de stockage 1 du lisier équipée d'au moins un hydro-injecteur 2, d'au moins un système d'écumage 3 et d'au moins un extracteur 4. Ces appareils étant montés sur des flotteurs 5, 6, 7 destinés à les maintenir à la surface du produit à traiter et immobilisés au moyen de cordages, câbles ou autres fixations.

L'ensemble est complété par une pompe de relevage, une sonde de régulation hydraulique et un automate associé à des programmateurs horaires et des contacteurs ainsi que par un tableau d'alimentation électrique pourvu des protections nécessaires.

Les hydro-injecteurs 2 sont placés de manière à favoriser au maximum l'homogénéisation du lisier à traiter. Ils favorisent l'apport d'air atmosphérique par micro-bullage en engendrant, grâce à des turbines 8, un courant 9 qui créé par effet venturi une dépression permettant une injection d'air, une oxygénation, mais aussi une floculation des matières en suspension et des matières dissoutes minérales et organiques.

La quantité et le positionnement de ces machines dépendent de la forme de la cuve de stockage 1 mais surtout de la fréquence et de la quantité de lisier brut apportée.

Les hydro-injecteurs 2 sont équipés d'un moteur immergé et sont réglables en profondeur et en angle d'injection. Le système de flottaison 5 permet de maintenir l'aspiration d'air hors du liquide, et permet aux machines une régulation autonome par rapport au niveau variable du lisier stocké.

Le flux d'air sous forme de micro-bulles remonte vers la surface le potassium et les matières en suspension. Ce nuage d'air crée en surface une couche de surnageant 10 semi-liquide. Le fonctionnement peut-être constant ou séquentiel.

Les systèmes d'écumage fig. 4 permettent d'oxygéner, de filtrer et d'homogénéiser le liquide à traiter.

Le principe de fonctionnement est basé sur l'admission du liquide à traiter dans une colonne 11 grâce à l'utilisation d'un injecteur 12. Le flux de liquide ainsi injecté permet la création d'une dépression et donc l'aspiration d'air atmosphérique 13.

Le flux de liquide et d'air est envoyé dans la colonne 11 de manière cycloïdale à mouvement descendant. Ce flux admet un échange gazeux dans le liquide à traiter.

Le flux de liquide ressort du système par des orifices 15 situés en partie inférieure de la colonne, tandis que les micro-bulles remontent vers la surface. Ce filtre naturel de microbulles collecte alors les composés particulaires et organiques dissous contenus dans le liquide traité, pour les canaliser dans la coupelle de récupération 14 située en partie haute de la colonne. Le condensât est ensuite évacué par pompage vers l'extérieur (flèche 16).

Dans le cadre du traitement du lisier de porc, le condensât obtenu est fortement concentré en phosphore.

L'extracteur, fig.5, de potassium permet de récupérer et de liquéfier le surnageant 10 produit par les hydro-injecteurs 2 pour permettre son évacuation. Le surnageant déborde par-dessus les flotteurs 7, et tombe dans l'extracteur qui est composé de trois parties distinctes : une partie émergée, une partie centrale et une partie immergée.

La partie émergée permet de maintenir le système verticalement dans le liquide à traiter, et sert de support pour un moteur 21 relié à un arbre 22 entraînant une hélice tournant dans un élément cylindrique 23.

La partie centrale est composée de flotteurs 7 réglables manuellement de façon à permettre d'adapter la flottaison du système complet par rapport à la texture du liquide à traiter. La hauteur d'immersion du système est très importante pour la récupération du surnageant et donc le débit d'extraction optimal du potassium.

La partie immergée est composée d'un réservoir 25 étanche à la partie supérieure duquel se trouve l'élément cylindrique 23 comportant une hélice. Ceci permet de centrifuger le surnageant sans éclaboussement dû à la rotation de l'hélice dans l'élément cylindrique. L'hélice liquéfie le composé semi-solide. La composition aqueuse obtenue est alors piégée dans le réservoir 25 de l'extracteur 4 et déclenche un capteur de niveau 26 fixé sur une paroi du réservoir, qui déclenche à son tour une pompe immergée 27 d'évacuation.

Le positionnement vertical du capteur de niveau est déterminant pour le bon fonctionnement de la pompe immergée, pour l'évacuation automatique du potassium, mais aussi pour le maintien vertical du système dans le bassin, le liquide assurant un contrepoids de par rapport au balancement de la partie haute émergée.

Le potassium liquide est ensuite évacué par la pompe à l'aide d'une tubulaire raccordé à un bassin de stockage extérieur.

Le positionnement des divers éléments constitutifs donne à l'objet de l'invention un maximum d'effets utiles qui n'avaient pas été, à ce jour, obtenus par des procédés similaires.

## Revendications

1. Installation de traitement de lisier de porc destinée à lutter contre la pollution des sols, des cours d'eau et des nappes phréatiques entraînée par l'élevage intensif des porcins, et assurant en particulier la séparation et l'évacuation du potassium et du phosphore contenus dans le lisier au moyen d'au moins un hydro-injecteur (2) apte à floculer et concentrer en surface les matières en suspension, d'au moins un système d'écumage (3) apte à concentrer le phosphore sous forme aqueuse et d'au moins un extracteur (4) destiné à récupérer, puis à évacuer le potassium concentré sous forme liquide,
**caractérisée en ce que** ces appareils sont installés dans des cuves de stockage (1) du lisier à traiter et montés sur des flotteurs (5, 6, 7) destinés à les maintenir à la surface du produit à traiter et immobilisés au moyen de cordages, câbles ou autres fixations.

2. Installation selon la revendication 1 dans laquelle le ou les hydro-injecteurs (2) sont équipés de turbines (8) engendrant un courant (9) du liquide à traiter et comportent un venturi avec injection d'air aspiré grâce à la dépression créé par le courant du liquide dans ledit venturi, de façon à provoquer une oxygénation et une floculation des matières en suspension et des matières dissoutes minérales et organiques, les flotteurs (5) permettant de maintenir l'aspiration d'air hors du liquide.

3. Installation selon l'une quelconque des revendications précédentes, dans laquelle le ou les hydro-injecteurs (2) sont équipés d'un moteur immergé et sont réglables en profondeur et en angle d'injection.

4. Installation selon l'une quelconque des revendications précédentes dans laquelle le ou les systèmes d'écumage (3) sont constitués d'une colonne (11) comportant un injecteur (12) de liquide à traiter agencé pour créer, lors de l'injection, une dépression provoquant l'aspiration d'air atmosphérique (13) et pour donner au flux de liquide et d'air envoyé dans ladite colonne un mouvement cycloïdale descendant créant des micro-bulles collectant les composés particulaires et organiques dissous contenus dans le liquide traité, des orifices (15) situés en partie inférieure de la colonne permettant la sortie du liquide tandis que les micro-bulles remontent vers la surface vers une coupelle (14) de récupération des composés extraits du liquide à traiter située en partie haute de la colonne.

5. Installation selon l'une quelconque des revendications précédentes dans laquelle le ou les extracteurs (4) de potassium sont constitués d'une partie immergée composée d'un réservoir (25) étanche rectangulaire à la partie supérieure duquel se trouve un élément cylindrique (23) comportant une grille de centrifugation, d'une partie centrale comportant des flotteurs (7) réglables manuellement de façon à permettre d'adapter la flottaison du système et d'une partie émergée servant de support pour un moteur (21) relié à un arbre (22) entraînant une hélice tournant dans l'élément cylindrique (23).

6. Installation selon la revendication 5 dans laquelle l'élément cylindrique (23) et l'hélice sont agencés pour liquéfier le composé semi-solide (10) produit par les hydro-injecteurs (2) et surnageant sur le produit à traiter, le liquide obtenu étant recueilli dans le réservoir (25)

7. Installation selon l'une quelconque des revendications 5 et 6 dans laquelle le réservoir (25) comporte une pompe immergée (27) d'évacuation du liquide déclenchée par un capteur de niveau (26) fixé sur une paroi dudit réservoir.

8. Installation selon l'une quelconque des revendications précédentes dans laquelle qu'elle est équipée de plusieurs sondes de régulation hydraulique et d'un automate associé à des programmateurs horaires et des contacteurs.

## Claims

1. A pig slurry treatment installation helping to prevent pollution of soils, rivers and groundwater resources by intensive pig farming and especially to extract and evacuate the potassium and phosphorous contained in the slurry by means of a hydro-injector (2) capable of flocculating and concentrating suspended matter on the surface, and at least one skimming system (3) capable of concentrating the phosphorous in aqueous form, and at least one extractor (4) designed to recover and then evacuate the potassium,
**characterized in that** these devices are installed in tanks (1) for storage of the slurry to be treated and are assembled on floaters (5, 6, 7) designed to maintain the product to be treated on the surface and to immobilize it by means of ropes, wires or other fixing systems.

2. Installation according to claim 1 **characterized in that** the hydro-injectors (2) are equipped with turbines (8) generating a current (9) in the liquid to be treated and comprising a Venturi with air injection drawn in by the depression created by the current of the liquid in the said Venturi, so as to cause oxidation and flocculation of the suspended matter and dissolved mineral and organic matter, floats (5) keeping the air suction out of the liquid.

3. Installation according to any of the preceding claims **characterized in that** the hydro-injectors (2) are equipped with an immersed motor, and are adjustable in depth and in injection angle.

4. Installation according to any of the preceding claims **characterized in that** the skimming systems (3) consist of a column (11) with an injector (12) of liquid to be treated arranged so as to create a depression during injection, causing atmospheric air (13) to be drawn in in order to generate in the liquid and air dispatched into the column a downwards cycloid movement creating micro-bubbles collecting the particulate and dissolved organic compounds contained in the treated liquid, openings (15) positioned in the lower part of the column allowing the liquid to flow out whereas the micro-bubbles rise towards a cup (14) for recovering of the compounds extracted from the liquid to be treated and situated in the upper part of the column.

5. Installation according to any of the preceding claims **characterized in that** potassium extractor(s) (4) consist(s) of an immersed part made up of a rectangular leaktight tank (25) in the upper part of which is a cylindrical element (23) comprising a centrifugal grille, a central part with floats (7) that can be mechanically adjusted to adapt system floatation and an emerged part supporting a motor (21) connected to a shaft (22) driving a propeller turning in the cylindrical element (23).

6. Installation according to claim 5 **characterized in that** cylindrical element (23) and propeller are arranged so as to liquefy the semi-solid compound (10) produced by the hydro-injectors (2) and floating on the product to be treated, the liquid obtained being collected in tank (25).

7. Installation according to any of claims 5 and 6 **characterized in that** tank (25), comprises an immersed pump (27) for evacuating the liquid which is tripped by a level sensor (26) fixed on the wall of the aforesaid tank.

8. Installation according to any of the preceding claims **characterized in that** this is equipped with several probes for hydraulic regulation and a plc associated with programming timers and contactors.

## Patentansprüche

1. Anlage zur Aufbereitung von Schweinemist und zur Reduzierung der Schadstoffbelastung von Böden, Gewässern und Grundwasser durch intensive Schweinezucht, insbesondere zum Erfassen und Ableiten des im Schweinemist enthaltenen Kaliums und Phosphors, die hierzu mindestens einen Hydro-Injektor (2), zum Ausflocken der Schwebstoffe und deren Konzentration an der Oberfläche, mindestens ein Schaumbildungssystem (3), zum Konzentrieren des Phosphors in wässeriger Form, und mindestens einen Extraktor (4) zum Sammeln und Ableiten des Kaliums besitzt, **gekennzeichnet dadurch, dass** diese Geräte in den Lagerbehältern (1) des zu behandelnden Schweinemistes auf Schwimmkörpern (5, 6, 7) installiert sind, mit denen sie an der Oberfläche des zu behandelnden Stoffes gehalten werden und die mit Seilen oder anderen Befestigungselementen festgehalten werden.

2. Anlage gemäss Anspruch 1, **gekennzeichnet dadurch, dass** der oder die Hydro-Injektoren (2) Turbinen (8) besitzen, welche die zu behandelnde Flüssigkeit in Strömung (9) versetzen, und eine Venturidüse, mit der aufgrund der Flüssigkeitsströmung durch den in der Venturidüse erzeugten Unterdruck Luft angesaugt wird, so dass die Sauerstoffzufuhr ein Ausflocken und der Schwebstoffe und der in Lösung befindlichen mineralischen und organischen Stoffe bewirkt, wobei die Schwimmkörper (5) die Luftansaugeinrichtung außerhalb der Flüssigkeit halten.

3. Anlage gemäss einem der vorstehenden Ansprüche, **gekennzeichnet dadurch, dass** die Hydro-Injektoren (2) einen Eintauchmotor besitzen und dass die Eintauchtiefe und der Injektionswinkel verstellbar sind.

4. Anlage gemäss einem der vorstehenden Ansprüche, **gekennzeichnet dadurch, dass** das oder die Schaumabzugsysteme (3) eine Säule (11) mit einem Injektor (12) für die zu behandelnde Flüssigkeit besitzen und so angeordnet sind, dass bei der Injektion ein Unterdruck erzeugt wird, der das Ansaugen der Umgebungsluft (13) bewirkt, und dass dem

5. Anlage gemäss einem der vorstehenden Ansprüche, **gekennzeichnet dadurch, dass** der oder die Kalium-Extraktoren (4) einen eintauchenden Teil bestehend aus einem dichten, rechteckigen Tank (25) bestehen, an dessen oberen Bereich sich ein zylindrisches Element (23) mit einem Zentrifugiergitter befindet, sowie einem mittleren Teil mit manuell einstellbaren Schwimmkörpern (7), um die Eintauchtiefe anzupassen, sowie einen nicht eintauchenden Teil, der als Gerüst für den Motor (21) dient, der über eine mit ihm verbundene Welle (22) eine Schraube in dem zylindrischen Element (23) dreht.

6. Anlage gemäss Anspruch 5, **gekennzeichnet dadurch, dass** das zylindrische Element (23) und die Schraube so angeordnet sind, dass der von den Hydro-Injektoren (2) erzeugte und auf der zu behandelnden Materie aufschwimmende halbfeste Stoff verflüssigt wird und die erhaltene Flüssigkeit in einem Tank (25) aufgefangen wird.

7. Anlage gemäss einem der Ansprüche 5 und 6, **gekennzeichnet dadurch, dass** der Tank (25) eine Eintauchpumpe (27) zur Ableitung der Flüssigkeit besitzt, welche von einem an der Wand des Tanks befestigen Füllstandsgeber (26) geschaltet wird.

8. Anlage gemäss einem der vorstehenden Ansprüche, **gekennzeichnet dadurch, dass** sie mit mehreren Sonden zur hydraulischen Regelung sowie einem Automaten versehen ist, der verschiedenen Zeitschaltuhren und Schaltschützen zugeordnet ist.
